# NEUE EUROPÄISCHE PATENTSCHRIFT

(11) **EP 0 415 418 B2**
(45) Veröffentlichungstag und Bekanntmachung des Hinweises auf die Entscheidung über den Einspruch: **16.10.1996**
(45) Hinweis auf die Patenterteilung: 06.04.1994
(21) Anmeldenummer: 90116670.2
(22) Anmeldetag: 30.08.1990
(51) Int. Cl.: B60R 22/00, A44B 11/25

(54) **Gurtschloss für ein Sicherheitsgurtsystem, das mit einer Rückstrammeinrichtung versehen ist**
Buckle for a safety belt system provided with a tensioning device
Boucle pour un système de ceinture de sécurité avec dispositif tendeur

(30) Priorität: 01.09.1989 DE 3929114
(43) Veröffentlichungstag der Anmeldung: 06.03.1991
(73) Patentinhaber: TRW Occupant Restraint Systems GmbH, D-73553 Alfdorf (DE)
(72) Erfinder: Föhl, Artur, D-7060 Schorndorf (DE)
(74) Vertreter: Leiser, Gottfried, Dipl.-Ing.

(56) Entgegenhaltungen:
- EP-A- 0 093 237
- EP-B- 0 186 880
- EP-B- 0 212 507
- WO-A-87/00735
- DE-A- 3 715 207

## Beschreibung

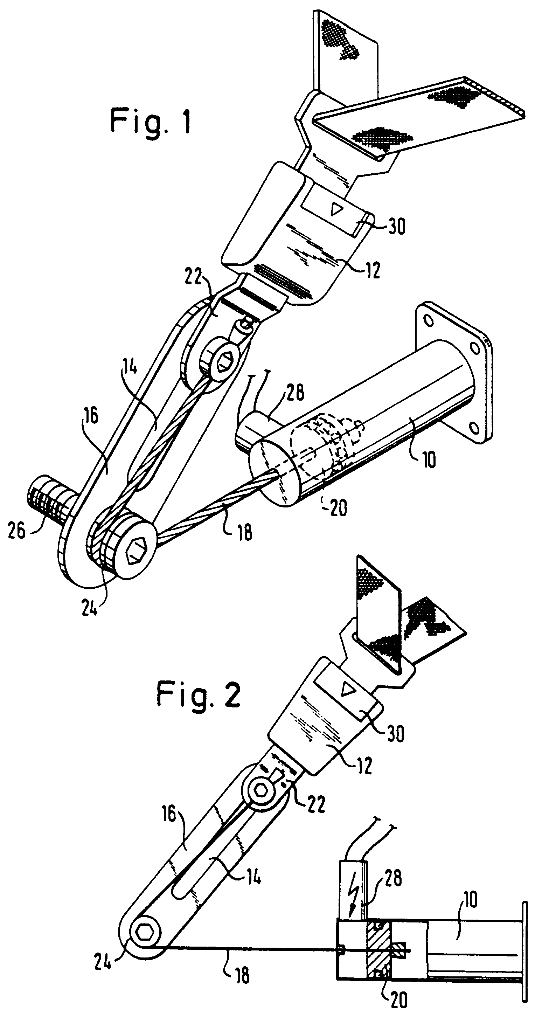

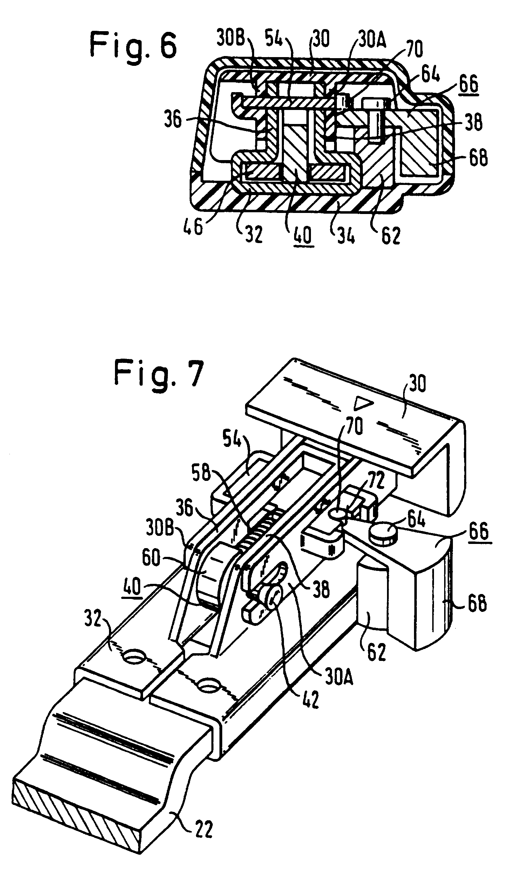

Die Erfindung betrifft ein Gurtschloß nach dem Oberbegriff des Patentanspruchs 1 bzw. des Patentanspruchs 2. Ein Gurtschloß mit den Merkmalen dieser Oberbegriffe ist aus den Figuren 1 - 3, bzw. 6 und 7 der EP-A-212 507 bekannt.

Gurtschlösser für Sicherheitsgurtsysteme sind in zahlreichen Ausführungen bekannt. Bewährt hat sich eine Bauform, bei der in dem Gehäuse des Gurtschlosses eine Führungsbahn für die Steckzunge gebildet ist und ein am Gehäuse quer zur Führungsbahn verschiebbar geführter oder verschwenkbar gelagerter Riegel mit einer Rastöffnung der Steckzunge zusammenwirkt. Ein parallel zur Führungsbahn in dem Gehäuse verschiebbar geführtes Sperrglied hält den Riegel in seiner Verriegelungsstellung, solange eine gleichfalls parallel zur Führungsbahn in dem Gehäuse verschiebbar geführte Auslösetaste sich in ihrer Ruhestellung befindet. Die Auslösetaste ist mit dem Sperrglied gekoppelt, um dieses bei Betätigung in eine Freigabestellung zu bewegen, in welcher der Riegel aus der Rastöffnung der Steckzunge freikommt.

Die Verwendung eines solchen Gurtschlosses in Sicherheitsgurtsystemen mit einer Rückstrammeinrichtung ist unproblematisch, wenn die Rückstrammkraft beispielsweise am Gurtaufroller wirksam wird. Es wurden auch bereits Rückstrammeinrichtungen vorgeschlagen, die zwischen dem Gurtschloß und seiner Befestigungsstelle am Fahrzeugaufbau oder einem Fahrzeugsitz wirksam werden. Derartige Rückstrammeinrichtungen verkürzen den Abstand zwischen der Befestigungsstelle des Gurtschlosses und dem Schloß selbst um einige Zentimeter, beispielsweise 10 cm. Die in solchen Fällen verwendeten Rückstrammeinrichtungen sind mechanisch ausgebildet und verfügen über einen Kraftspeicher in Form einer gespannten Feder, die durch einen auf Trägheitskräfte ansprechenden Sensor freigegeben wird und im Bedarfsfalle eine Rückstrammung bewirkt.

Mechanische Rückstrammeinrichtungen benötigen zur Bereitstellung der geforderten Rückstrammkraft eine sehr stark dimensionierte Feder. Die fahrzeugsensitive Auslösung einer solchen Feder bei gut reproduzierbaren Auslöseschwellen bereitet große Schwierigkeiten.

Mit einer pyrotechnischen Rückstrammeinrichtung, die als Rückstrammantrieb einen Kolben/Zylinder-Linearantrieb mit einem den Kolben im Zylinder im Auslösefall mit Druckgas beaufschlagenden pyrotechnischen Gasgenerator aufweist, lassen sich hohe Rückstrammkräfte vergleichsweise leicht erzielen. Es wurde nun aber gefunden, daß ein Gurtschloß der eingangs beschriebenen Art bei Verwendung im Zusammenhang mit einer solchen pyrotechnischen Rückstrammeinrichtung zu einem selbsttätigen Öffnen neigt.

Der Erfindung liegt die Aufgabe zugrunde, ein Gurtschloß der eingangs angegebenen Art dahingehend weiterzubilden, daß die Ausgleichsmasse leicht am Schloßgehäuse untergebracht werden kann.

Diese Aufgabe wird bei dem Gurtschloß der eingangs angegebenen Art erfindungsgemäß die kennzeichnenden Merkmale des Patentanspruchs 1 bzw. des Patentanspruchs 2 glöst. Durch diese Maßnahme wird die Masse der Auslösetaste und aller damit verbundener Teile kompensiert. Im Falle einer Rückstrammung wird das Gurtschloß durch die Rückstrammkraft mit extrem hoher Beschleunigung zu seiner Befestigungsstelle am Fahrzeugaufbau oder an einem Fahrzeugsitz hin bewegt. Das Gurtschloß und sein Befestigungsbeschlag erreichen am Ende des Rückstrammhubes eine hohe Geschwindigkeit, ebenso wie die Auslösetaste des Gurtschlosses und alle damit gekoppelten Massen. Der Hub der Rückstrammbewegung ist aus praktischen Gründen begrenzt, so daß der Befestigungsbeschlag des Gurtschlosses mit hoher Geschwindigkeit auf einem den Rückstrammhub begrenzenden Anschlag auftreffen kann. Aufgrund von Massenträgheitskräften ist die Auslösetaste mit den an sie angekoppelten Massen bestrebt, ihre Bewegung fortzusetzen, also eine Bewegung in einer Richtung, welche der normalen Betätigung der Auslösetaste zum Öffnen des Gurtschlosses entspricht. Unter ungünstigen Umständen kann bei diesem Vorgang ein selbsttätiges Öffnen des Gurtschlosses auftreten. Durch die erfindungsgemäße Maßnahme wird ein solches selbsttätiges Öffnen aber sicher verhindert, weil den Trägheitskräften der Auslösetaste und der daran angekoppelten Massen eine Ausgleichskraft entgegengesetzt wird, welche durch die Massenträgheit der Ausgleichsmasse erzeugt wird.

Bei praktischen Ausführrungsformen der Erfindung ist die Ausgleichsmasse so dimensioniert, daß die von ihr erzeugten Trägheitskräfte etwas größer sind als die der Auslösetaste und der mit ihr gekoppelten Massen. Durch diese Maßnahme wird eine hohe Funktionssicherheit erreicht, die Fertigungstoleranzen, Reibung und alterungsbedingten Veränderungen Rechnung trägt und so ein unbeabsichtigtes Öffnen des Gurtschlosses auch im Falle einer besonders ungünstigen Konstellation von Toleranzen und äußeren Einflüssen verhindert. Die Ausgleichsmasse erzeugt also im Normalfall eine Gegenkraft zu den an der Auslösetaste auftretenden Trägheitskräften, die etwas größer ist als diese Trägheitskräfte.

Einige vorteilhafte Weiterbildungen der Erfindung sind in den Unteransprüchen angegeben.

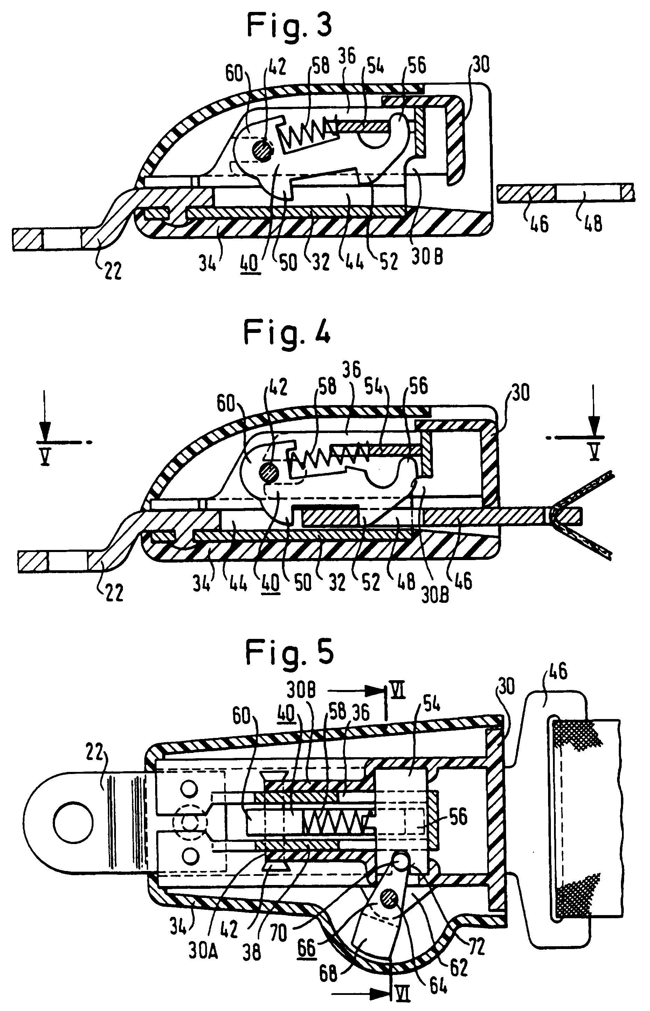

Weitere Merkmale und Vorteile der Erfindung ergeben sich aus der folgenden Beschreibung mehrerer Ausführungsformen der Erfindung und aus der Zeichnung, auf die Bezug genommen wird. In der Zeichnung zeigen:
Fig. 1
   eine schematische Perspektivansicht einer Rückstrammeinrichtung, die an einem Gurtschloß angreift;
Fig. 2
   eine teils im Schnitt gezeigte Seitenansicht der Rückstrammeinrichtung;
Fig. 3
   einen Längsschnitt eines erfindungsgemäßen Gurtschlosses im Zustand der betätigten Auslösetaste;
Fig. 4
   eine analoge Schnittansicht des Gurtschlosses im Zustand der eingeschobenen und verriegelten Steckzunge;
Fig. 5
   eine Schnittansicht des Gurtschlosses entlang Linie V-V in Fig. 4;
Fig. 6
   einen Querschnitt des Gurtschlosses entlang der Linie VI-VI in Fig. 5;
Fig. 7
   eine schematische Perspektivansicht der Funktionsteile des Gurtschlosses; und
Fig. 8, 9 und 10
   eine andere Ausführungsform des Gurtschlosses.

Die in Fig. 1 gezeigte Rückstrammeinrichtung besteht aus einem pyrotechnischen Kolben/Zylinder-Rückstrammantrieb 10, dessen Zylinder am Fahrzeugaufbau verankert ist, einer Längsführung für das Gurtschloß 12 in Form einer mit einem Langloch 14 versehenen gestreckten Verankerungsplatte 16, einem Zugseil 18, welches den Kolben 20 mit dem Befestigungsbeschlag 22 des Gurtschlosses verbindet, und einer Umlenkrolle 24, über die das Zugseil 18 geführt ist und die auf einem Befestigungsbolzen 26 gelagert ist, mittels welchem die Verankerungsplatte 16 am Fahrzeugaufbau befestigt ist.

Die Figuren 1 und 2 zeigen die Rückstrammeinrichtung im nichtaktivierten Zustand. Wie aus Fig. 2 ersichtlich ist, ist eine Stirnseite des Kolbens 20 durch Druckgase beaufschlagbar, die von einem pyrotechnischen Gasgenerator 28 erzeugt werden. Unter der Wirkung der Druckgase wird der Kolben 20 mit extrem hoher Beschleunigung angetrieben und zieht über das Zugseil 18 und den Befestigungsbeschlag 22 das Gurtschloß 12 nach unten. Am unteren Ende des Langlochs 14 wird die Bewegung des Gurtschlosses 12 plötzlich abgebremst. Durch eine in den Kolben 20 integrierte Rücklaufsperre wird verhindert, daß nach erfolgter Rückstrammung das Gurtschloß 12 in Richtung seiner Ausgangsstellung verlagert werden kann.

Wenn das Gurtschloß 12 am Ende des Rückstrammhubes plötzlich abgebremst wird, treten an der Auslösetaste 30 und den mit ihr verbundenen Teilen hohe Trägheitskräfte auf, die in Richtung der Auslösebewegung der Auslösetaste orientiert sind. Durch die nun unter Bezugnahme auf die Figuren 3 bis 10 beschriebene Ausbildung des Gurtschlosses wird vermieden, daß diese Trägheitskräfte zu einem unbeabsichtigten Öffnen des Gurtschlosses führen.

Der Verankerungsbeschlag 22 ist durch eine Nietverbindung mit dem lasttragenden Teil des Schloßgehäuses 32 verbunden. Dieses Gehäuse 32 ist von einer Abdeckung in Form einer Kunststoffschale 34 umgeben. Das Schloßgehäuse 32 ist mit einem in Draufsicht U-förmigen, hochgezogenen Lagerbügel versehen, zwischen dessen beiden parallelen Schenkeln 36, 38 ein Schwenkriegel 40 mittels eines Lagerbolzens 42 gelagert ist. Die Auslösetaste 30 besitzt zwei sich in das Schloßinnere erstreckende parallele Arme 30A, 30B, die an ihrem freien Ende mit einem Führungsschlitz versehen sind, den die äußeren Enden des Lagerbolzens 42 durchgreifen. Die Auslösetaste 30 ist an den Außenseiten der Schenkel 36, 38 gleitverschiebbar geführt.

Das Schloßgehäuse 32 ist mit einer Führungsbahn 44 für eine Steckzunge 46 versehen, die eine Rastöffnung 48 aufweist. Ein Steuernocken 50 des Schwenkriegels 40 ragt in die Führungsbahn 44 hinein. Der Schwenkriegel 40 ist ferner mit einer Rastnase 52 im Bereich seines freien Endes versehen.

Zwischen den beiden Armen 30A, 30B der Auslösetaste 30 ist ein Sperrglied 54 in Form einer Stahlplatte oberhalb eines Ansatzes 56 am freien Ende des Schwenkriegels 40 befestigt. Eine Druckfeder 58 stützt sich mit ihrem einen Ende an dem Sperrglied 54 und ihrem anderen Ende an einem Hebelarm 60 des Schwenkriegels 40 ab, welcher dem Steuernocken 50 gegenüberliegt.

Bei der in Fig. 3 gezeigten Stellung hintergreift der Ansatz 56 des Schwenkriegels 40 die vordere Kante des Sperrgliedes 54, so daß die Rastnase 52 aus der Führungsbahn 44 durch die Druckfeder 58 herausgeschwenkt wird. Die Auslösetaste 30 ist in ihrer betätigten Stellung gezeigt.

Bei dem in Fig. 4 gezeigten Zustand ist die Steckzunge 46 eingeschoben und die Rastnase 52 in der Rastöffnung 48 verrastet.

An dem Schloßgehäuse 32 ist seitlich ein Ansatz 62 befestigt (Fig. 5, 6 und 7). An diesem Ansatz 62 ist mittels eines Lagerstiftes 64 ein zweiarmiger Hebel 66 schwenkbar gelagert. An dem einen Arm dieses Hebels 66 ist eine Ausgleichsmasse 68 befestigt. Der andere Arm des Hebels 66 greift mittels eines Kurbelansatzes 70 in einer Ausnehmung 72 des Sperrgliedes 54 an. Die Ausgleichsmasse 68 ist also kraftschlüssig mit der Auslösetaste 30 und dem Sperrglied 54 verbunden. Da die Ausgleichsmasse 68 sich jedoch an dem von der Auslösetaste 30 und dem Sperrglied 54 abgewandten Arm des Hebels 66 befindet, wirken die durch die Ausgleichsmasse 68 erzeugten Trägheitskräfte entgegengesetzt zu denen, die durch die Auslösetaste 30, das Sperrglied 54 und alle mit diesen gekoppelten Massen verursacht werden.

Die Ausgleichsmasse 68 ist so dimensioniert, daß sie ein Öffnen des Gurtschlosses aufgrund von Trägheitskräften unter allen Umständen verhindert. Vorzugsweise ist sie etwas größer bemessen als die Summe der Massen der Auslösetaste 30, des Sperrgliedes 54 und aller mit diesen verbundenen Teile.

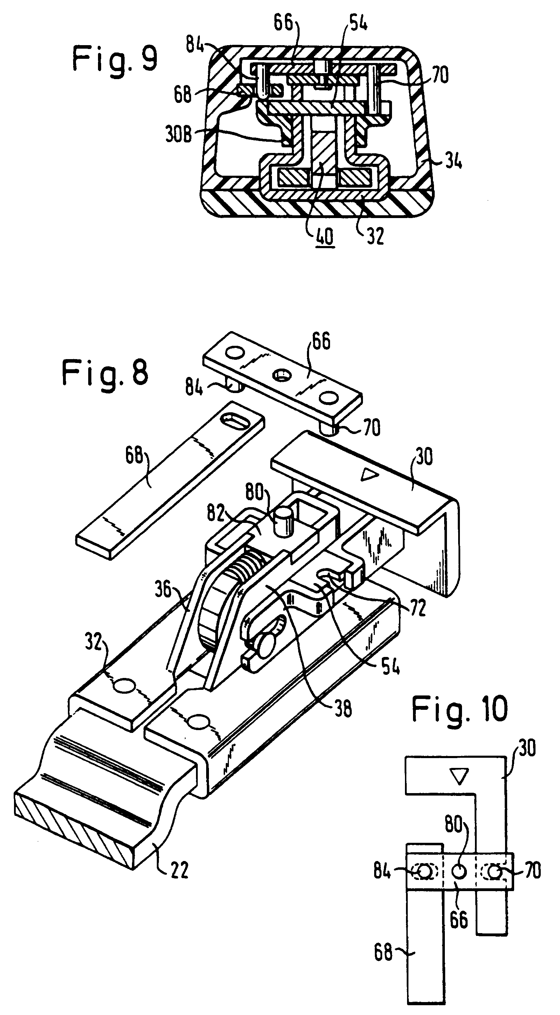

Die Fig. 8 zeigt eine zweite Ausführungsform des erfindungsgemäßen Gurtschlosses in Explosivansicht; Fig. 9 zeigt diese Ausführungsform im Querschnitt, und Fig. 10 veranschaulicht die Relativanordnung der Auslösetaste, des zweiarmigen Hebels und der Ausgleichsmasse.

Diese zweite Ausführungsform unterscheidet sich von der zuvor beschriebenen nur durch die Anordnung und Lagerung des zweiarmigen Hebels 66 und der Ausgleichsmasse 68. Der zweiarmige Hebel ist in seiner Mitte auf einem Lagerzapfen 80 schwenkbar gelagert, der in der Mitte einer Platte 82 befestigt ist, welche die beiden Schenkel 36, 38 des Schloßgehäuses 32 miteinander an ihrem oberen Rand verbindet. Diese Platte 82 liegt dem Sperrglied 54 gegenüber. Die Ausgleichsmasse 68 ist als gestreckte Platte ausgebildet und gelenkig an einen Kurbelzapfen 84 am Ende des einen Hebelarms des zweiarmigen Hebels 66 gelenkig angeschlossen. Die Ausgleichsmasse 68 erstreckt sich parallel zur Längsrichtung des Schloßgehäuses 32 und ist an diesem in Längsrichtung verschiebbar gelagert.

Wie Fig. 10 erkennen läßt, bewirkt auch bei dieser Ausführungsform der zweiarmige Hebel 66 eine Umkehrung der Richtung, in welcher die Massenträgheitskräfte aufgrund der Ausgleichsmasse 68 wirksam werden. Die Massen der Auslösetaste 30 und aller mit ihr verbundenen Teile werden daher durch die Ausgleichsmasse 68 kompensiert.

Die Ausführungsform nach den Figuren 8, 9 und 10 ermöglicht eine leichte Unterbringung der Ausgleichsmasse in einem Schloßgehäuse.

## Patentansprüche

1. Gurtschloß (12) für ein Sicherheitsgurtsystem, das mit einer Rückstrammeinrichtung (10) versehen ist, die zwischen dem Gurtschloß und einer Verankerungsstelle am Fahrzeugaufbau oder einem Fahrzeugsitz wirksam wird, mit folgenden Merkmalen:
- in einem Gehäuse (32) des Gurtschlosses (12) ist eine Führungsbahn (44) für die Steckzunge (46) des Sicherheitsgurtsystems gebildet;
- ein am Gehäuse (32) quer zur Führungsbahn verschiebbar geführter oder verschwenkbar gelagerter Riegel (40) wirkt mit einer Rastöffnung (48) der Steckzunge (46) zusammen;
- ein Sperrglied (54) hält den Riegel in seiner Verriegelungsstellung;
- eine gleichfalls parallel zur Führungsbahn (44) in dem Gehäuse (32) verschiebbar geführte Auslösetaste (30) ist mit dem Sperrglied (54) gekoppelt, um dieses in eine Freigabestellung zu bewegen, in welcher der Riegel (40) aus der Rastöffnung (48) der Steckzunge (46) heraus bewegbar ist;
- ein zweiarmiger Hebel (66) ist auf einer Achse (64) am Gehäuse (32) schwenkbar gelagert, an dessen einem Hebelarm eine durch eine Abkröpfung gebildete Ausgleichsmasse (68) befestigt ist und dessen anderer Hebelarm kraftschlüssig an der Auslösetaste (30) oder dem Sperrglied (54) angreift,
**dadurch gekennzeichnet, daß**
- das Sperrglied (54) parallel zur Führungsbahn (44) in dem Gehause (32) verschiebbar geführt ist,
- die Achse (64) für den zweiarmigen Hebel (66) senkrecht auf der Ebene der Führungsbahn angeordnet ist,
- der an der Auslösetaste (30) oder dem Sperrglied (54) angreifende Hebelarm mit einem Kurbelzapfen (70) versehen ist, der in eine Ausnehmung (72) des Sperrgliedes (54), der Auslösetaste (30) oder eines mit ihr verbundenen Teiles eingreift,
- und der Kurbelzapfen (70) entgegengesetzt zur Ausgleichsmasse (68) abgekröpft ist.

2. Gurtschloß (12) für ein Sicherheitsgurtsystem, das mit einer Rückstrammeinrichtung (10) versehen ist, die zwischen dem Gurtschloß und einer Verankerungsstelle am Fahrzeugaufbau oder einem Fahrzeugsitz wirksam wird, mit folgenden Merkmalen:
- in einem Gehäuse (32) des Gurtschlosses (12) ist eine Führungsbahn (44) für die Steckzunge (46) des Sicherheitsgurtsystems gebildet;
- ein am Gehäuse (32) quer zur Führungsbahn verschiebbar geführter oder verschwenkbar gelagerter Riegel (40) wirkt mit einer Rastöffnung (48) der Steckzunge (46) zusammen;
- ein Sperrglied (54) hält den Riegel in seiner Verriegelungsstellung;
- eine gleichfalls parallel zur Führungsbahn (44) in dem Gehäuse (32) verschiebbar geführte Auslösetaste (30) ist mit dem Sperrglied (54) gekoppelt, um dieses in eine Freigabestellung zu bewegen, in welcher der Riegel (40) aus der Rastöffnung (48) der Steckzunge (46) heraus bewegbar ist;
- ein zweiarmiger Hebel (66) ist auf einer Achse (80) am Gehäuse (32) schwenkbar gelagert, an dessen einem Hebelarm eine sich parallel zur Längsrichtung des Schloßgehäuses erstreckende und an diesem in Längsrichtung verschiebbar gelagerte Ausgleichsmasse (68) angeschlossen ist und dessen anderer Hebelarm kraftschlüssig an der Auslösetaste (30) oder dem Sperrglied (54) angreift,
**dadurch gekennzeichnet, daß**
- das Sperrglied (54) parallel zur Führungsbahn (44) in dem Gehäuse (32) verschiebbar geführt ist,
- die Achse des *Lagerzapfens* (80) für den zweiarmigen Hebel (66) senkrecht auf der Ebene der Führungsbahn angeordnet ist,
- der an der Auslösetaste (30) oder dem Sperrglied (54) angreifende Hebelarm mit einem Kurbelzapfen (70) versehen ist, der in eine Ausnehmung (72) des Sperrgliedes (54), der Auslösetaste (30) oder eines mit ihr verbundenen Teiles eingreift,
- die Ausgleichsmasse (68) durch einen Kurbelzapfen (84), der in die gleiche Richtung wie der das Sperrglied verbindende Kurbelzapfen (70) weist, gelenkig mit dem zweiarmigen Hebel (66) gekoppelt ist.

3. Gurtschloß nach Anspruch 1, **dadurch gekennzeichnet**, daß der zweiarmige Hebel (66) an einem seitlich neben der Führungsbahn (44) an dem lasttragenden Teil des Schloßgehäuses (32) befestigten Ansatz (62) schwenkbar gelagert ist.

4. Gurtschloß nach einem der vorstehenden Ansprüche, **dadurch gekennzeichnet**, daß die Ausnehmung (72) an einem zur Führungsbahn 44) parallelen Rand des Sperrgliedes (54) angebracht ist.

5. Gurtschloß nach einem der vorstehenden Ansprüche, **dadurch gekennzeichnet**, daß das Sperrglied (54) eine mit der Auslösetaste (30) formschlüssig verbundene Platte ist.

6. Gurtschloß nach einem der vorstehenden Ansprüche, **dadurch gekennzeichnet**, daß der Riegel (40) ein an dem lasttragenden Teil des Schloßgehäuses (32) gelagerter Schwenkriegel ist.

7. Gurtschloß nach Anspruch 2, **dadurch gekennzeichnet**, daß der zweiarmige Hebel (66) dem Sperrglied (54) gegenüberliegend an einem lasttragenden Gehäuseteil schwenkbar gelagert ist und die Ausgleichsmasse (68) gelenkig an den einen Hebelarm des zweiarmigen Hebels (66) angeschlossen ist.

8. Gurtschloß nach Anspruch 7, **dadurch gekennzeichnet,** daß die Ausgleichsmasse (68) als gestreckte Platte ausgebildet und in Längsrichtung des Schloßgehäuses (32) verschiebbar gelagert ist.

9. Sicherheitsgurt-Rückhaltesystem mit einer zwischen Gurtschloß (12) und einer Verankerungsstelle am Fahrzeugaufbau oder einem Fahrzeugsitz angreifenden Rückstrammeinrichtung (10), **dadurch gekennzeichnet**, daß die Rückstrammeinrichtung (10) als Kolben/Zylinder-Linearantrieb (10) mit einem den Kolben (20) im Zylinder im Auslösefalle mit Druckgas beaufschlagenden pyrotechnischen Gasgenerator (28) ausgebildet ist und daß das Gurtschloß (12) gemäß einem der Ansprüche 1 bis 8 ausgebildet ist.

10. Sicherheitsgurt-Rückhaltesystem nach Anspruch 9, **dadurch gekennzeichnet**, daß der Kolben (20) des Kolben/Zylinder-Linearantriebs (10) über ein Zugseil (18) an dem über einen Beschlag (16) in einer Längsführung (14) verschiebbar geführten Gurtschloß (12) angreift.

11. Sicherheitsgurt-Rückhaltesystem nach Anspruch 10, **dadurch gekennzeichnet**, daß das Zugseil (18) zwischen dem Gurtschloß (12) und dem Kolben Zylinder-Linearantrieb (10) umgelenkt ist.

## Claims

1. Belt lock (12) for a safety belt system provided with a tightening means (10) which is operative between the belt lock and an anchoring point on the vehicle bodywork or a vehicle seat, having the following features:
- in a housing (32) of the belt lock (12) a guide path (44) for the insert tongue (46) of the safety belt system is formed;
- a latch (40) which, transversely to the guide path, is guided displaceably on the housing (32) or pivotally mounted thereon cooperates with a detent opening (48) of the insert tongue (46);
- a blocking member (54) holds the latch in its locking position;
- a release button (30) likewise guided displaceably parallel to the guide path (44) in the housing (32) is coupled to the blocking member (54) to move the latter to a release position in which the latch (40) is movable out of the detent opening (48) of the insert tongue (46);
- a two-armed lever (66) is pivotally mounted at the housing (32) on a pin (64), one arm of the lever being fixed to a compensation mass (68) formed by a crank and the other arm engaging the release button (30) or the blocking member (54) in force-transmitting manner,
characterized in that
- the blocking member (54) is guided displaceably parallel to the guide path (44) in the housing (32),
- the pin (64) for the two-armed lever is arranged perpendicularly to the plane of the guide path,
- the lever engaging the release button (30) or the blocking member (54) is provided with a a crank lug (70) which engages into a recess (72) of the blocking member (54), the release button (30) or a part connected thereto,
- and in that the crank lug (70) is cranked oppositely to the compensation mass (68).

2. Belt lock (12) for a safety belt system provided with a tightening means (10) which is operative between the belt lock and an anchoring point on the vehicle bodywork or a vehicle seat, having the following features:
- in a housing (32) of the belt lock (12) a guide path (44) for the insert tongue (46) of the safety belt system is formed;
- a latch (40) which, transversely to the guide path, is guided displaceably on the housing (32) or pivotally mounted thereon cooperates with a detent opening (48) of the insert tongue (46);
- a blocking member (54) holds the latch in its locking position;
- a release button (30) likewise guided displaceably parallel to the guide path (44) in the housing (32) is coupled to the blocking member (54) to move the latter to a release position in which the latch (40) is movable out of the detent opening (48) of the insert tongue (46);
- a two-armed lever (66) is pivotally mounted at the housing (32) on a pin (80), one arm of the lever being connected to a compensation mass (68) extending parallel to the longitudinal direction of the lock housing and being supported displaceably thereon and the other arm engaging the release button (30) or the blocking member (54) in force-transmitting manner,
characterized in that
- the blocking member (54) is guided displaceably parallel to the guide path (44) in the housing (32),
- the axis of the pin (80) for the two-armed lever (66) is arranged perpendicularly to the plane of the guide path,
- the lever engaging the release button (30) or the blocking member (54) is provided with a a crank lug (70) which engages into a recess (72) of the blocking member (54), the release button (30) or a part connected thereto,
- and in that the compensation mass (68) is articulated to the two-armed lever (66) via a crank lug (84) which extends in the same direction as the crank lug (70) connecting the blocking member.

3. Belt lock according to claim 1, characterized in that the two-armed lever (66) is pivotally mounted on an extension (62) mounted laterally adjacent the guide path (44) on the load-bearing part of the lock housing (32).

4. Belt lock according to any one of the preceding claims, characterized in that said recess (72) is disposed at an edge of the blocking member (54) parallel to that of the guide path (44).

5. Belt lock according to any one of the preceding claims, characterized in that the blocking member (54) is a plate connected in form-locking manner to the release button (30).

6. Belt lock according to any one of the preceding claims, characterized in that the latch (40) is a pivot latch mounted on the load-bearing part of the lock housing (32).

7. Belt lock according to claim 2, characterized in that the two-armed lever (66) is pivotally mounted opposite the blocking member (54) on a loadbearing housing part and the compensation mass (68) is articulately connected to the one lever arm of the two-armed lever (66).

8. Belt lock according to claim 7, characterized in that the compensation mass (68) is formed as elongated plate and is mounted displaceably in the longitudinal direction of the housing (32).

9. Safety belt restraining system comprising a tightening means (10) engaging between the belt lock (12) and an anchoring point on the vehicle body or a vehicle seat, characterized in that the tightening means (10) is constructed as piston/cylinder linear drive (10) having a pyrotechnical gas generator (28) subjecting the piston (20) in the cylinder to pressurized gas in the event of triggering and that the belt lock (12) is constructed in accordance with any one of claims 1 to 8.

10. Safety belt restraining system according to claim 9, characterized in that the piston (20) of the piston/cylinder linear drive (10) via a pulling cable (18) engages the belt lock (12) is displaceably guided via a fitting (16) in a longitudinal guide (14).

11. Safety belt restraining system according to claim 10, characterized in that said pulling cable (18) is deflected between the belt lock (12) and the piston/cylinder linear drive (10).

## Revendications

1. Fermoir (12) d'un système de ceinture de sécurité comprenant un dispositif de rétraction (10) dont l'action s'exerce entre le fermoir (12) et un point de fixation sur la carrosserie ou un siège du véhicule, comprenant les particularités suivantes :
- une glissière (44) destinée à la plaquette enfichable (46) du système de ceinture de sécurité est réalisée dans une cage (32) du fermoir (12) ;
- un verrou (40) monté sur la cage (32) et guidé à coulissement perpendiculairement à la glissière ou pivotant coopère avec une ouverture d'encliquetage (48) de la plaquette enfichable (46) ;
- un organe de blocage (54) retient le verrou en position de verrouillage ;
- un bouton poussoir de libération (30) également guidé à coulissement dans la cage (32) parallèlement à la glissière (44) est accouplé à l'organe de blocage (54) afin de déplacer ce dernier pour le mettre à une position de libération à laquelle le verrou (40) est déplaçable pour être extrait de l'ouverture d'encliquetage (48) de la plaquette enfichable (46) ;
- un levier à deux bras (66) est monté pivotant sur un axe (64) que comporte la cage (32), une masse d'équilibrage (68) formée d'un coude étant fixée sur l'un des bras de ce levier dont l'autre bras attaque par l'exercice d'une force le bouton poussoir de libération (30) ou l'organe de blocage (54),
caractérisé en ce que
- l'organe de blocage (54) est guidé à coulissement parallèlement à la glissière (44) dans la cage (32),
- l'axe (64) du levier à deux bras (66) est disposé perpendiculairement au plan de la glissière,
- le bras de levier attaquant le bouton poussoir de libération (30) ou l'organe de blocage (54) comporte un tourillon de manivelle (70) qui pénètre dans une échancrure (72) de l'organe de blocage (54), du bouton poussoir de libération (30) ou d'un élément relié à ce dernier,
- et le tourillon de manivelle (70) est coudé dans le sens opposé à celui de la masse d'équilibrage (68).

2. Fermoir (12) d'un système de ceinture de sécurité comprenant un dispositif de rétraction (10) dont l'action s'exerce entre le fermoir et un point de fixation sur la carrosserie ou un siège du véhicule, ayant les particularités suivantes :
- une glissière (44) destinée à la plaquette enfichable (46) du système de ceinture de sécurité est réalisée dans une cage (32) du fermoir (12) ;
- un verrou (40) monté sur la cage (32) et guidé à coulissement perpendiculairement à la glissière ou pivotant coopère avec une ouverture d'encliquetage (48) de la plaquette enfichable (46) ;
- un organe de blocage (54) retient le verrou (40) en position de verrouillage ;
- un bouton poussoir de libération (30) guidé à coulissement également parallèlement à la glissière (44) à l'intérieur de la cage (32) est accouplé à l'organe de blocage (54) afin de déplacer ce dernier pour le mettre à une position de libération à laquelle le verrou (40) est déplaçable pour être extrait de l'ouverture d'encliquetage (48) de la plaquette enfichable (46) ;
- un levier à deux bras (66) est monté pivotant sur un axe (80) que comporte la cage (32), une masse d'équilibrage (68) qui est orientée parallèlement à la direction de la longueur de la cage du fermoir et qui est montée à coulissement sur cette dernière dans la direction de la longueur étant raccordée à l'un des bras de ce levier dont l'autre bras attaque par l'exercice d'une force le bouton poussoir de libération (30) ou l'organe de blocage (54),
caractérisé en ce que
- l'organe de blocage (54) est guidé à coulissement dans la cage (32) parallèlement à la glissière (44),
- l'axe du tourillon (80) pour le levier à deux bras (66) est disponsé perpendiculairement au plan de la glissière,
- le bras de levier qui attaque le bouton poussoir de libération (30) ou l'organe de blocage (54) comporte un tourillon de manivelle (70) qui pénètre dans une échancrure (72) de l'organe de blocage (54), du bouton poussoir de libération (30) ou d'un élément relié à ce dernier,
- la masse d'équilibrage (68) est accouplée par articulation avec le levier à deux bras (66) au moyen d'un tourillon de manivelle (84) qui est orienté dans la même direction que le tourillon de manivelle (70) reliant l'organe de blocage.

3. Fermoir de ceinture selon la revendication 1, caractérisé en ce que le levier à deux bras (66) est monté pivotant sur une pièce rapportée (62) fixée latéralement à côté de la glissière (44) sur la partie de la cage du fermoir (32) qui supporte la charge.

4. Fermoir de ceinture selon l'une des revendications précédentes, caractérisé en ce que l'échancrure (72) est réalisée sur un bord de l'organe de blocage (54) qui est parallèle à la glissière (44).

5. Fermoir de ceinture selon l'une des revendications précédentes, caractérisé en ce que l'organe de blocage (54) est une plaque reliée par complémentarité de formes au bouton poussoir de libération (30).

6. Fermoir de ceinture selon l'une des revendications précédentes, caractérisé en ce que le verrou (40) est un verrou pivotant monté sur la partie de la cage du fermoir (32) qui supporte la charge.

7. Fermoir de ceinture selon la revendication 2, caractérisé en ce que le levier à deux bras (66) est monté pivotant en face de l'organe de blocage (54) sur une partie de la cage qui supporte la charge et la masse d'équilibrage (68) est reliée par articulation à l'un des bras du levier à deux bras (66).

8. Fermoir de ceinture selon la revendication 7, caractérisé en ce que la masse d'équilibrage (68) est conformée en plaque encastrée et montée translatable dans la direction de la longueur de la cage du fermoir (32).

9. Système de retenue d'une ceinture de sécurité comprenant un dispositif de rétraction (10) dont l'action s'exerce entre le fermoir de la ceinture (12) et un point de fixation sur la carrosserie ou un siège du véhicule, caractérisé en ce que le dispositif de rétraction (10) est constitué d'un entraînement linéaire (10) à piston et cylindre comprenant un générateur pyrotechnique de gaz (28) qui envoie du gaz sous pression dans le cylindre contre le piston (20) en cas de déclenchement et en ce que le fermoir (12) de la ceinture est réalisé selon l'une des revendications 1 à 7.

10. Système de retenue d'une ceinture de sécurité selon la revendication 9, caractérisé en ce que le piston (20) de l'entraînement linéaire (10) à piston et cylindre attaque au moyen d'un câble de traction (18) le fermoir (12) de la ceinture guidé à coulissement au moyen d'une armature (16) dans un guide longitudinal (14).

11. Système de retenue d'une ceinture de sécurité selon la revendication 10, caractérisé en ce que le câble de traction (18) est dévié entre le fermoir (12) de la ceinture et l'entraînement linéaire (10) à piston et cylindre.
